# EUROPEAN PATENT APPLICATION

(11) **EP 2 083 371 A2**
(43) Date of publication of application: **29.07.2009**
(21) Application number: 09150441.5
(22) Date of filing: 13.01.2009
(51) Int. Cl.: G06F 21/00

(54) **Content asset management system, method and control program**

(30) Priority: 21.01.2008 JP 2008010695
(71) Applicant: NEC Corporation, Minato-ku Tokyo (JP)
(72) Inventor: Uemitsu, Masato, Tokyo (JP)
(74) Representative: Betten & Resch

(57) **Abstract**

A content asset management system, a method and a control program capable of managing a content asset of each person while protecting benefit as property of these content assets are provided. Each person deposits a content subject that he or she owns in an object storage warehouse 109 of a service provider side. Content data indicating the content subject are stored in a content database on the basis of this, a relation of rights such as a list of content of the person is recorded in a user management database 107. A user who utilizes the content data, including the owner of the content subject, accesses the service side with a user terminal 101 to carry out authentication, causes a format converter 105 to convert the content data into a data format suitable for the person, and receives delivery from a content delivery server 102 to utilize them.

## Description

This application is based upon and claims the benefit of priority from Japanese patent application No. 2008-10695, filed January 21, 2008, the disclosure of which is incorporated herein in its entirety by reference.

### Background of the Invention:

### 1. Field of the Invention

This invention relates to a content asset management system for managing various content assets, which can digitized, such as video, music, images, games and the like, and a method and a control program thereof.

### 2. Description of the Related Art

Spread of computers and the Internet allows individuals to have increasing opportunities for treating digital data representing content such as music and cinemas. These digital data may include ones into which old photographs, cinema films and the like are digitized to keep them in physical media such as CDs and DVDs.

These digital data also may include the content data which are downloaded for a fee via the Internet, for example, and many of them themselves are worth as property. Further, one's own game software or photographs filmed by one are private property, and many of them are worth as content subjects indicating histories about one and one's family or individuals.

Moreover, an ISP (Internet Services Provider), an ASP (Application Service Provider), or fixed and mobile businesses that sell various kinds of content can provide various content data generated from content subjects as added-value services. Further, businesses such as banks can provide a keeping service of content as part of deposit of a personal asset.

Now, as a related technology of the present invention, a technique to hold various kinds of content such as video content, audio content and data content in cassette-type tapes and to manage them by keeping them in a keeping shelf as a library exists (for example, see Japanese Patent Application Publication No. 2002-304871 (Paragraphs 0007, 0017 and 0084 and Fig. 1)). In this related technology, original tapes are offered to broadcasting stations from licensers having copyright to create a database. Program directors look at a ledger and get out necessary original tapes from the library to edit them and create an air-play tape for air-play. The air-play tape is also recorded in the database. Identifiers indicating keeping places of these tapes are added to the database.

### Summary of the Invention:

In the related technology of the present invention, the tape offered to the broadcasting stations from the licensers having copyright of content for broadcasting and the tape edited for broadcasting are managed as the library utilized only in the broadcasting station. Therefore, the respective tapes managed in the library can be utilized freely for editing or broadcasting programs of one organization called a broadcasting station by ones constituting the organization. For this reason, users cannot be restricted for each of the tapes. Further, the licenser who offers the tape or the public who wants to utilize the tape cannot utilize various tapes of this library.

Namely, in the case where the related technology of the present invention is applied to a content asset that each person owns, a form of library is to be adopted. As a result, a third person makes free use of one's content asset, and property cannot be protected.

The present invention provides a content asset management system, a method and a control program capable of managing a content asset of each person while protecting benefit as property of these content assets.

According to an aspect of the invention, a content asset management system comprises: content subject keeping means for collecting and keeping content subjects which memorize or represent content capable of being a subject for delivery through a network; content data storage means for storing as digital data content data of the content subjects kept by the content subject keeping means; determining means, in response to a request to deliver predetermined content data, for determining whether or not the request if from an eligible person who comprises an owner of content or has a relationship defined in advance to the owner; and content data delivery means for reading out the content data requested to be delivered from the content data storage means and delivering it to a user terminal of the eligible person via the network in the case where the request is from the eligible person.

The content asset management system may comprises data format conversion means for converting the content data read out from the content data storage means into digital data that the user terminal to be delivered can reproduce.

In accordance with another aspect of the invention, a content asset managing method comprises: collecting content subjects which memorize or represent content capable of being a subject for delivery through a network and keeping keep them in content subject keeping means, and storing as digital data content data of the content subjects kept by the content subject keeping means in content data storage means; determining whether or not the request is from an eligible person who is an owner of the content or has a relationship defined in advance to the owner in response to the request to deliver predetermined content data; and reading out the content data requested to be delivered from the content data storage means and delivering it to a user terminal of the eligible person in the case where it is determined that the request is from the eligible person.

A further aspect of the invention provides a program stored in a computer readable media for a computer of a content management system, which is provided with content subject keeping means for collecting and keeping content subjects which memorize or represent content capable of being a subject for delivery through a network. The program causes the computer to execute: a content data storage process for storing as digital data content data of the content subjects kept by the content subject keeping means in a content data storage means; determining process for determining whether or not a request is from an eligible person who is an owner of content or has a relationship defined in advance to the owner in response to the request to deliver predetermined content data; and a content data delivery process for reading out the content data requested to be delivered from the content data storage means and delivering it to a user terminal of the eligible person in the case where it is determined that the request if from the eligible person.

A still another aspect of the invention provides a user terminal connected via a network to a content asset management system keeping content media which hold content and providing utilization of the content. The user terminal comprises: means for carrying out a registration procedure process of the user terminal by accessing the content asset management system; means for specifying content to be utilized and a utilization condition thereof to receive content data from the content asset management system; means for specifying a lendable content and a lending condition thereof, the lendable content being among content data related to content media deposited by a user; and means for notifying a lent person specified by the content asset management system that the content media is lendable.

As described above, since the present invention determines whether one who carries out a request to deliver the content data is a eligible person or not, one other than the content owner is also allowed to positively promote utilization of content if a condition of a requesting eligible person permits.

### Brief Description of the Drawing:

Fig. 1 is a system configuration diagram showing an outline of a configuration of a content asset management system according to a present embodiment;
Fig. 2 is a block diagram showing a main part of a configuration of a user terminal according to the present embodiment;
Fig. 3 is a block diagram showing a main part of a configuration of a content delivery server according to the present embodiment;
Fig. 4 is a block diagram showing a main part of a configuration of an authentication server according to the present embodiment;
Fig. 5 is a block diagram showing a main part of a configuration of a format converter according to the present embodiment;
Fig. 6 is a block diagram showing a main part of a configuration of a content database according to the present embodiment;
Fig. 7 is a block diagram showing a main part of a configuration of a user management database according to the present embodiment;
Fig. 8 is a flowchart showing an outline of a content asset management process by means of the user terminal according to the present embodiment;
Fig. 9 is a flowchart showing a process of the user terminal related to user registration and deregistration according to the present embodiment;
Fig. 10 is a flowchart showing a process related to registration and deregistration at the user management database and access authority of the content according to the present embodiment;
Fig. 11 is an explanatory view showing a flowchart of the process carried out in an object storage warehouse according to the present embodiment;
Fig. 12 is a plan view in which an example of a classification table of the content is displayed on a content management screen according to the present embodiment;
Fig. 13 is a plan view specifically showing content with respect to one of classifications in the content management screen according to the present embodiment;
Fig. 14 is a flowchart showing a content utilization process by the user terminal according to the present embodiment;
Fig. 15 is a flowchart showing a process of the authentication server when the user terminal carries out the content utilization process according to the present embodiment;
Fig. 16 is a flowchart showing a state of a process of the content database when utilization of content is carried out according to the present embodiment;
Fig. 17 is a flowchart showing a state of a conversion process for a data format by means of the format converter according to the present embodiment;
Fig. 18 is a flowchart showing a state of a content delivery process by the delivery server according to the present embodiment;
Fig. 19 is a flowchart showing a state of a setting process for a lent person carried out by the user terminal at the content lending process according to the present embodiment;
Fig. 20 is a flowchart showing a state of a process carried out by the user management database in the content lending process according to the present embodiment;
Fig. 21 is a flowchart showing a state of a content utilization process by a lent person's terminal according to the present embodiment; and
Fig. 22 is a flowchart showing a state of a process of the authentication server concerned to the content lending process according to the present embodiment.

### Description of the Exemplary Embodiments:

Next, a content asset management system according to the present embodiment will be described. In the present embodiment, personal content assets are to be managed. In this embodiment, corporative content assets are not treated. The content asset related to individuals in the present embodiment means various kinds of electronic information such as those of music, images, games, novels, articles and programs, which users personally purchased through regular procedures, got from someone, or worked. Further, in order to simplify the explanation here, content having a problem of copyright is to be removed from a subject in the embodiment.

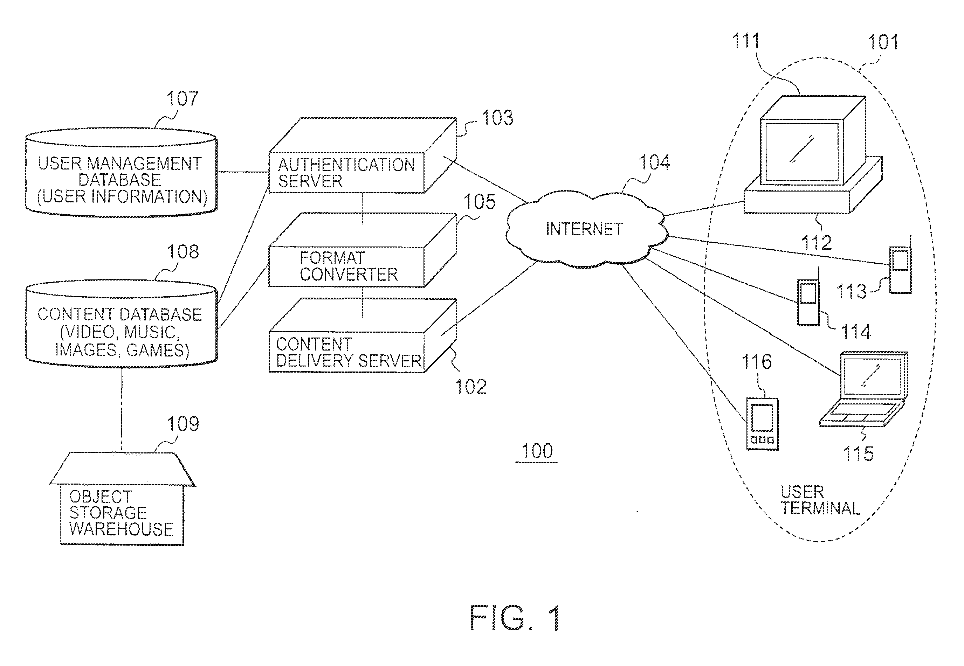

Fig. 1 is a view showing an outline of a configuration of a content asset management system according to the present embodiment. This content asset management system 100 has a configuration in which a group of user terminals 101 that utilizes services and a content delivery server 102 of a service provider side that delivers content are connected to a network as represented by the Internet 104 as well as an authentication server 103 that carries out authentication. The content delivery server 102 is connected to a content database 108 as a database of various kinds of content via a format converter 105 that carries out a conversion process for unifying a data format of content. The authentication server 103 is connected to each of the format converter 105, a user management database 107 and the content database 108.

In this content asset management system 100, memory media (content dealing object) such as a CD (Compact Disc), a DVD (Digital Versatile Disk), a videotape and a USB (Universal Serial Bus) memory, which individuals carry as content assets, are not utilized in its original forms. After electronic data are outputted from these or they are converted into electronic data, the electronic data are stored in the content database 108. Therefore, a physical content dealing object such as a CD carried as content assets is kept in an object storage warehouse 109.

In the content asset management system 100 having such a configuration, the group of user terminals 101 for utilizing content can be configured from various kinds of information processing apparatuses that can access the Internet 104, For example, a STB (Set Top Box) 112 that defers content such as various programs and karaoke to a television set 111, a cellular phone 113 capable of transmitting and receiving the content, a PHS (Personal Handyphone System) 114, a mobile type or desktop type of personal computer 115, or a PDA (Personal Digital Assistants) 116 can be configured as representatives of the user terminal. In the present specification, in the case where there is no need to specify an information processing apparatus particularly, information processing apparatuses of these cellular phone 113 and the like are collectively called the user terminal 101.

The authentication server 103 carries out an identity verification process when a user utilizes a service. Predetermined one of service utilization information, which is stored in the user management database 107, is utilized at this identity verification. The authentication server 103 of the present embodiment is further provided with a function to identify the kind of user terminal 101 utilized by a user of the content and a network environment. The authentication server 103 utilizes this identification result, and provides information to the format converter 105 so that the content is converted into suitable content in accordance with the user.

The user management database 107 is a database for managing service utilization information of users of content. The service utilization information is composed of various kinds of registration information related to utilization of content such as the substance of the kept content, a password and ID (identifier) of each user, disclosable range of each content, family information of each user, a lending status of the content, a service utilization status and charging information. The user management database 107 provides the registration information via a network 104 in response to a request from the user terminal 101.

The content database 108 is a database for collectively storing content of content subjects deposited by users in the form of digital data. In order to effectively utilize the content delivery server 102, content data on commercially available goods kept by the content database 108 are shared with other users. For this reason, a content asset deposited to a service provider side by the user is converted into data kept by the content database 108.

For example, in the case where content data of music composition has already been registered as the substance of a commercially available CD in the content database 108 when a user brings this CD in which the music composition is stored, this CD is shared and storage of the content data is not carried out newly. On the other hand, for example, in the case where there is no one the same as a videotape of an athletic meting of a primary school filmed by the user in the content database 108, this is read as digital data to add it into the content database 108.

The format converter 105 converts the form of the content into a form in which a service can be utilized in accordance with the type of user terminal 101, by which the content is utilized, and a network environment. Thus, the identification information obtained from the authentication server 103 is utilized. For example, setting of resolution and gradation of an image is carried out depending on whether the user terminal 101 is a cellular phone 113 or a personal computer 115 in the case where content is a video or a photograph.

The content delivery server 102 is connected to the user terminal 101 via the Internet 104. Then, when the authentication server 103 succeeds authentication, the content stored in the content database 108 is delivered to the extent that the user can utilize in response to a request from the user. Here, although the Internet 104 has been mentioned as a network for delivering the content, any network that can communicate content, such as CATV (Community Antenna Tension), a wired or wireless LAN (Local Area Network), and a cellular phone network, can of course be a subject of the present invention.

Now, there are two types of users who utilize (implement) content via the user terminal 101 in the present embodiment. A first type of user is one who keeps a content subject at a service provider side. A second type of user is one who does not own a content subject itself and utilize the content data by getting a license from a first type of user. A second type of user normally places a contract, which an available range of content and an available substance such as a period of time thereof are provided, with a first type of user. The second type of user has a contractual relationship as a predetermined relationship that has been defined in advance. The authentication server 103 determines whether the second type of user is a requesting eligible person or not using the user management database 107 when he or she requests to utilize the content. Therefore, when there are second types of users, the first type of user is required to notify the side of the user management database 107 of this. The same is true in the case where there becomes no second type of user or a change in the contract in which an available substance is defined is generated.

It is a matter of course that the first type of user could utilize the content that he or she owns even in a stage before utilizing this content asset management system 100. Such a first type of user utilizes the content asset management system 100 according to the present embodiment, by which he or she can obtain advantages as follows.
(1) By keeping a content subject such as a DVD that a first type of user owns in the object storage warehouse 109, a fixed keeping quality can be ensured. Namely, the content subject can be protected from theft, loss, or breakage or deterioration due to a disaster or a bad environment. Further, by causing a service provider side to confirm that he or she is an honest first type of user, it is also possible to match a return request or a disposal request of the content subject.
(2) By utilizing databases such as the content database 108 and human resources of the service provider side, at the time when the first type of user deposits the content subject, it is possible to determine value thereof for property, or to determine presence or absence of problems related to copyright. For example, in the case where the same content exists in the content database 108 as commercially available goods, it is possible to determine whether the content subject possessed by the user is commercially available goods or not.
(3) When the first type of user dies, the content subject can be a subject of succession as property without mistakenly getting rid of the content subject as trash. Further, by keeping the content subject in the object storage warehouse 109 and registering the substance, and disclosing a catalog of the content subjects as needed, it is possible to utilize the content subjects as property.

The second type of user can get the content subject from the first type of user, and positively and property carry out setting of a right for utilization via a service provider having specialized knowledge. For example, it is possible to seek confirmation as to whether or not the content that becomes a subject of purchase or utilization is music composition included in a record, which is very hardly obtained currently, for example, as one property acquired.

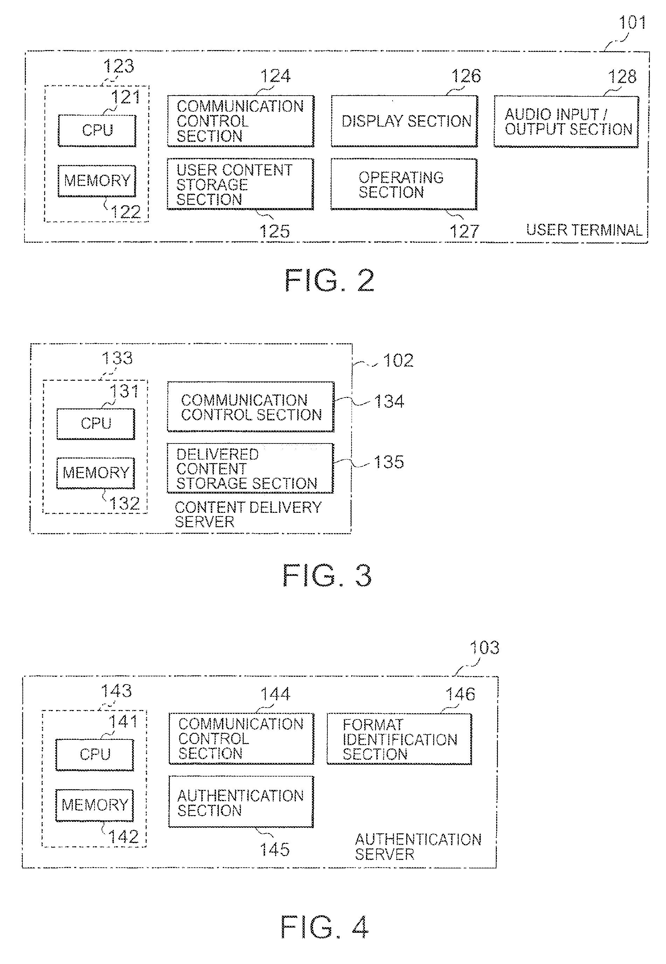

Fig. 2 is a view showing a main part of a configuration of a user terminal in such a content asset management system. A user terminal 101 is provided with a control section 123 having a CPU (Central Processing Unit) 121 and a memory 122. Control programs are stored in the memory 122, and a part of the memory 122 functions as a work area. Further, the user terminal 101 is provided with: a communication control section 124 for carrying out communication via the internet 104 (Fig. 1); a user content storage section 125 for storing content that the user terminal 101 utilizes; a display section 126 for displaying visual content and data necessary for operations; an operating section 127 for carrying out various operations; and an audio input/output section 128 for utilizing the content. Of course, other device such as a camera that carries out input of image information may be provided depending on the type of terminal.

Fig. 3 is a view showing a main part of a configuration of the content delivery server. A content delivery server 102 is provided with a control section 133 having a CPU 131 and a memory 132, Control programs are stored in the memory 132, and a part of the memory 132 functions as a work area. Further, the content delivery server 102 is provided with a communication control section 134 for carrying out communication via the Internet 104 (Fig. 1), and a delivered content storage section 135.

Fig. 4 is a view showing a main part of a configuration of the authentication server. The authentication server 103 is provided with a control section 143 having a CPU 141 and a memory 142 for storing control programs. A part of the memory 142 functions as a work space. Further, the authentication server 103 is provided with a communication control section 144 for carrying out communication via the Internet 104 (Fig. 1), an authentication section 145 for carrying out authentication and a format identification section 146 for identifying a data format of the content. Here, the control section 143 can functionary achieve at least a part of each portion in the authentication server 103 by means of the control programs.

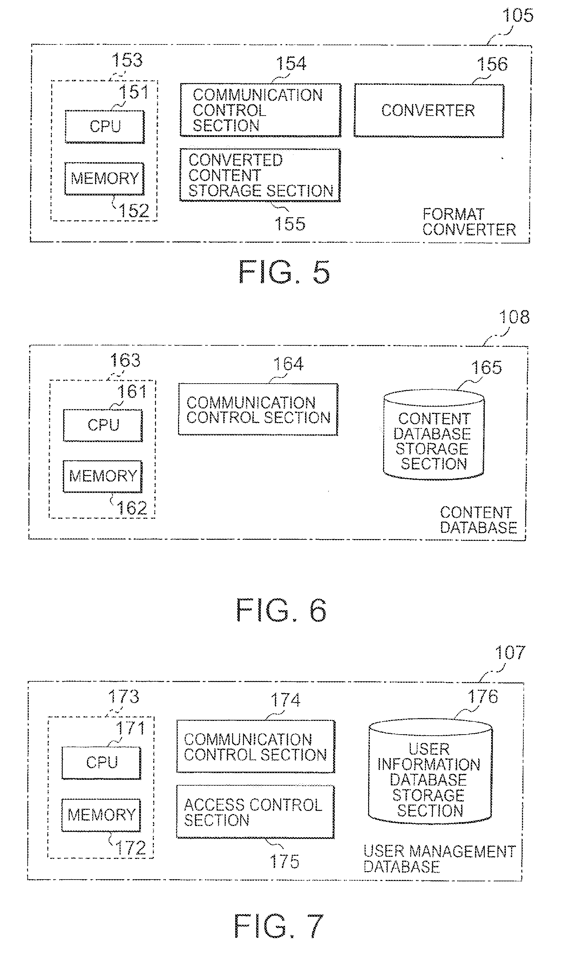

Fig. 5 is a view showing a main part of a configuration of the format converter. The format converter 105 is provided with a control section 153 having a CPU 151 and a memory 152. Control programs are stored in the memory 152, and a part of the memory 152 functions as a work area. Further, the format converter 105 is provided with a communication control section 154 for carrying out communication via the Internet 104 (Fig. 1), a converted content storage section 155 for storing the content for conversion and a converter 156. Here, the control section 153 can functionary achieve the converter 156 by means of the control programs.

Fig. 6 is a view showing a main part of a configuration of the content database. The content database 108 is provided with a control section 163 having a CPU 161 and a memory 162. Control programs are stored in the memory 162, and a part of the memory 162 functions as a work area. Further, the content database 108 is provided with a communication control section 164 for carrying out communication via the Internet 104 (Fig. 1), and a content data storage section 165 for storing databases for various kinds of delivery.

Fig. 7 is a view showing a main part of a configuration of the user management database. The user management database 107 is provided with a control section 173 having a CPU 171 and a memory 172. Control programs are stored in the memory 172, and a part of the memory 172 functions as a work area. Further, the user management database 107 is provided with a communication control section 174 for carrying out communication via the Internet, 104 (Fig. 1), an access control section 175 for carrying out control of access by a relationship with a password or an ID and a user information data base storage section 176 for storing user information. Here, the control section 173 can functionary achieve the access control section 175 by means of the control programs.

As described above, an outline of the content asset management system 100 according to the present embodiment and these configurations have been explained. Next, processes of the content asset management system 100 will be described specifically.

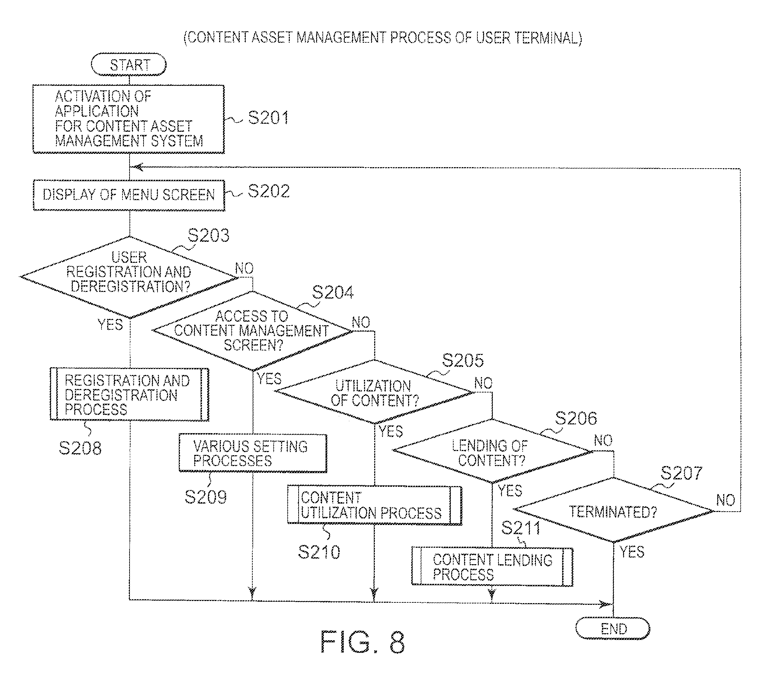

Fig. 8 is a flowchart showing an outline of a content asset management process by means of the user terminal. It will be described together with Figs. 1 and 2. An application programs for achieving the content asset management according to the present embodiment is stored in the memory 122 of the user terminal 101. The user activates this application program (Step S201), and causes the display section 126 to display a menu screen for selecting various processes (Step S202). In the menu screen, a menu for user registration and deregistration (Step S203), a menu for access to a content management screen (Step S204), a menu for utilization of content (Step S205), a menu for lending of content (Step S206), and a menu for terminating the content asset management system (Step S207) are displayed.

Here, when the user selects the menu for user registration and deregistration by means of operations of the operating section 127 (Step S203: Y), a process for user registration and erasure of the registration is carried out (Step S208). In the case where the user selects the menu for access in the content management screen (Step S204: Y), various setting processes for managing the content are carried out (Step S209). Further, in the case where the user selects the menu for utilization of content (Step S205: Y), a process for utilizing the content is carried out (Step S210). Moreover, in the case where the user selects the menu for lending of the content (Step S206: Y), a process for lending content data to others is carried out (Step S211). On the other hand, in the case where the user selects termination of any action of the system without carrying out the above processes (Step S207: Y), the action of content asset management system 100 at the user side is terminated.

### <Processes from user registration to content registration and deregistration thereof>

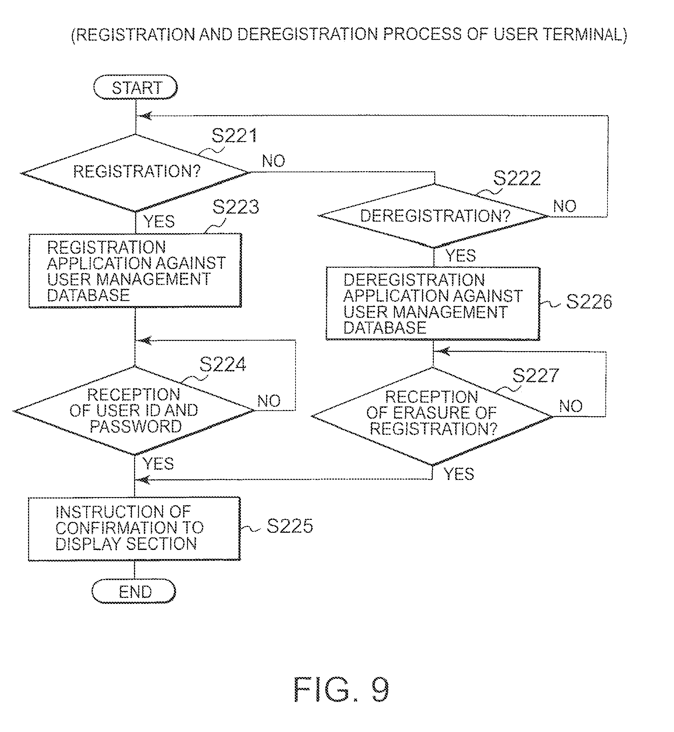

Fig. 9 is a flowchart specifically showing a process of the user terminal related to user registration and deregistration shown at Step S208 in Fig. 8. It will be described together with Figs. 1 and 2. When the user terminal 101 selects the process for user registration and erasure of the registration at Step S203 in Fig. 8 (Y), it is selected to carry out the user registration (Step S221 in Fig. 9) or to erase this user registration (Step S222). In the case where the user registration is carried out (Step S221: Y), an application for the user registration is carried out against the user management database 107 (Step S223). Then, when a user ID and a password of the user are transmitted from the user management database 107 (Step S224: Y), these are displayed on the display section 126 for confirmation (Step S225), and the process is terminated. The user records the user ID and password in a manner to note them in a memorandum (not shown in the drawings) or the like.

On the other hand, in the case where the user erases the user registration (Step S222: Y), an application for deregistration is carried out against the user management database 107 (Step S226). Then, when there is reception that deregistration from the user management database 107 is terminated (Step S227: Y), these are displayed on the display section 126 for confirmation (Step S225), and the process is terminated. In this regard, there is no need for the user management database 107 to allocate the password and ID, and the user may present them to receive approval.

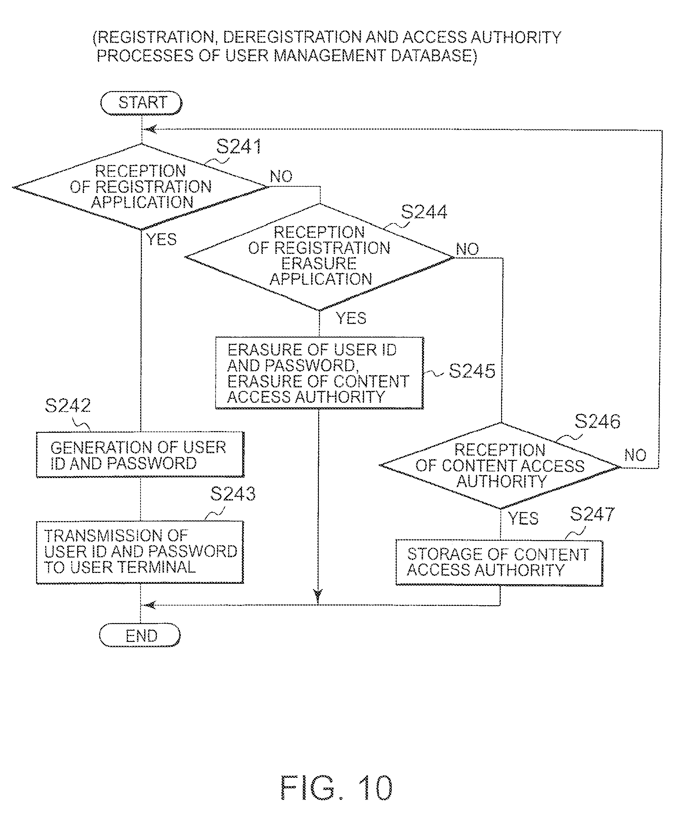

Fig. 10 is a flowchart showing a state of a process related to registration and deregistration at the user management database side and access authority of the content, which is related to the processes of Fig. 9. It will be described on the basis of Figs. 2, 7 and 9. When there is a registration application based on the process at Step S223 in Fig. 10 from the user terminal 101 (Step S241: Y), the access control section 175 in the user management database 107 generates a user ID and a password that are not utilized for other user terminals (Step S242) to transmit these to the user terminal 101 that carried out the application (Step S243).

Further, in the case where there is a deregistration application from the user terminal 101 (Step S244: Y), the user management database 107 confirms that one is a regular user (owner of the content subject), and then erases the corresponding user ID and password. Further, in the case where access authority for the content is set, it is erased because this is made redundant (Step S245). Moreover, in the case where access authority for one's own content is set from one's user terminal 101 (Step S246: Y), the user management database 107 stores this substance in the user information data storage section 176 (Step S247). Similarly, the user ID and password are also stored in the user information database storage section 176.

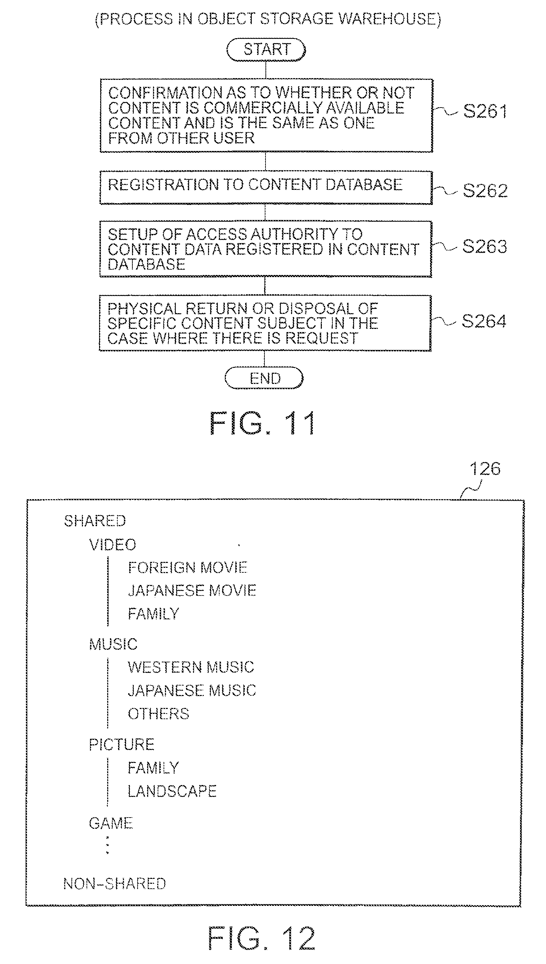

Fig. 11 is a flowchart showing a flowchart carried out in the object storage warehouse. When the application for user registration is carried out at Step S223 in Fig. 9, the user delivers a content subject that the user wants to request to keep to the service provider side by mailing or a delivery method as specified. A service provider carries this to the object storage warehouse 109. The service provider first carries out identification as to whether the content subject requested for keeping from the user is a commercially available content subject or not, and carries out confirmation as to whether the content subject about the same content subject or content corresponding to this is deposited from other user (Step S261). In such a process, for example, in the case of a CD or a DVD, these media may be driven by means of a drive circuit of a computer (not shown in the drawings) provided in the object storage warehouse 109 to read out bibliographic information, and compare it with a database of CDs and DVDs that are commercially available around the world.

As a result, in the case where the corresponding content subject or content is commercially available one and this has already been registered in the content database 108, only a right of utilization is registered in the user information database. In the case of absence of registration, a private content subject or content created by an individual, this is converted into content data to be newly registered in the content database 108 (Step S262). In this regard, with respect to other media such as videotapes, slides, pictures and books, content data are similarly read out using various kinds of reading means. In the case where the content data are the same substance, a right of utilization is set up. In the case where the content data are a different substance, digital data after reading are newly registered in the content database 108 as content data.

Next, the service provider links the content registered in the content database 108 to access authority for the user to set up the access authority from the user (Step S263). At this stage, the user accesses the user management database 107 by inputting the user ID and password from the user terminal 101 (see Step S204 in Fig. 8), and sets up details of the access authority such as which range or what condition other persons are allowed to access the content related to the content subject requested for keeping by himself or herself (see Step S209). Further, the user accesses a dedicated content management web screen by inputting the user ID and password in the same manner to carry out confirmation as to whether or not the deposited content subject is accurately registered, and to carry out settings required for classification of the content and the like.

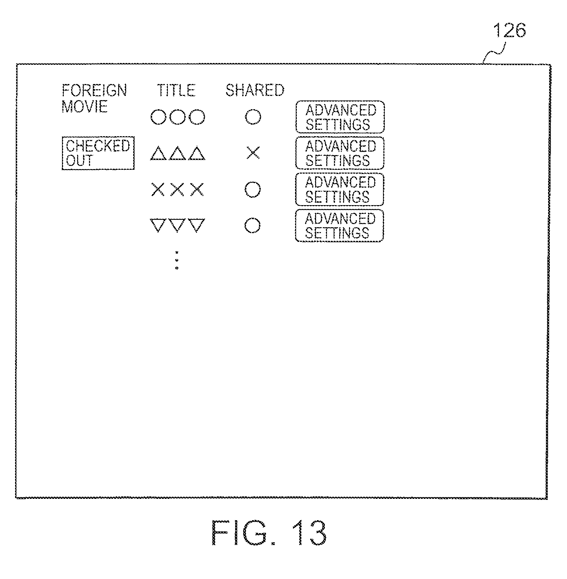

Figs. 12 and 13 are views respectively showing examples of a content management web screen accessed by the user. The user operates the user terminal 101 shown in Fig.2 using the operating section 127, by which these are displayed on the display section 126.

Fig. 12 is a view showing an example of a classification table of content on the content management screen. On the display section 126, it is indicated that the content related to the kept content subjects is classified into content shared with other persons and content non-shared, and that the shared content is classified into categories in a hierarchical structure to be utilized.

Fig. 13 is a view specifically showing content with respect to one of classifications in the content management screen. Here, a list of "foreign movies" kept by a user is displayed on the display section 126. An indication of that effect "checked out" is carried out for one lent for other person of the content (content data). Even the user himself or herself cannot utilize the checked-out content until the checked-out content is returned from other person. However, in the case where the user causes a plurality of same content subjects to be kept in the service provider side, a right of utilization can be set for other person or the user can utilize it unless the number of content subjects exceeds the kept number.

Returning again to Fig. 11, the explanation will be provided. In the case where an owner hopes return or disposal of the content subjects after the service provider keeps these content subjects in the object storage warehouse 109, these are returned to the owner or disposal thereof is carried out by causing the owner to specify it from the content management screen displayed on the display section 126 of the user terminal 101 (Step S264). Of course, it is a given fact to get the agreement of the user who is utilizing the content data when carrying out such dealing, In the case of carrying out disposal, not only the corresponding content of the owner is completely discarded from the object storage warehouse 109, but also the digital data of the content is deleted from the content database 108 when the content is a content subject for which other person has no overlapping relation of rights as a user of the content.

### <Content utilization process by user>

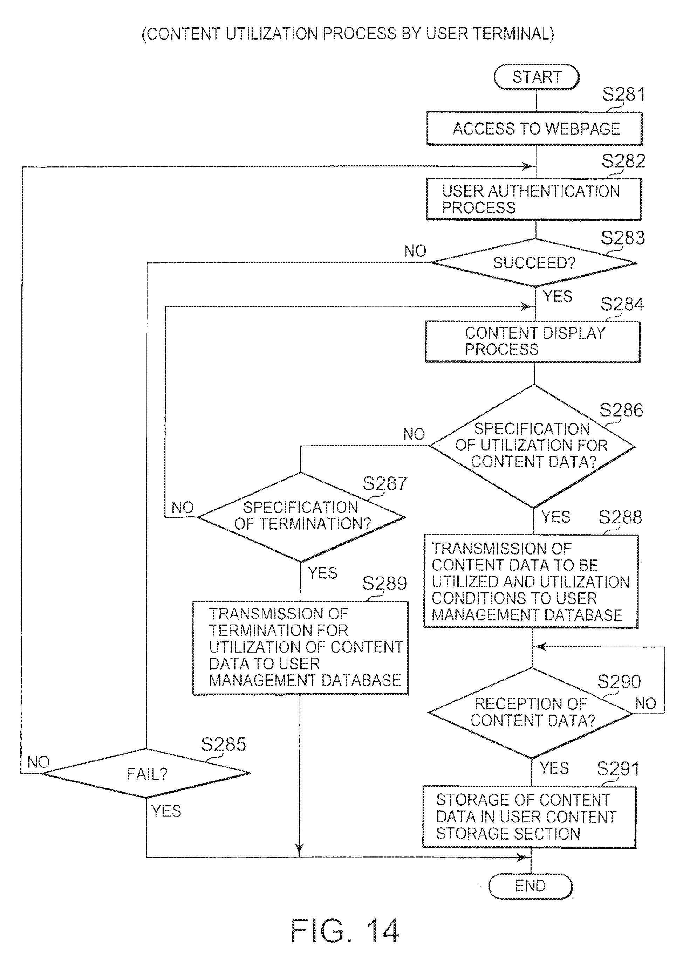

Fig. 14 is a flowchart showing a content utilization process by the user terminal, This is one specifically showing the content of the process at Step S210 in Fig. 8. It will be described on the basis of Figs. 1, 2, 4 and 7.

The user first accesses the authentication server 103 in which the webpage of the service provider is provided (Step S281) to carry out a user authentication process with the authentication section 145 (Step S282). As a result, in the case where the authentication section 145 succeeds authentication (Step S283: Y), the content display process as shown in Figs. 12 and 13 is carried out on the display section 126 (Step S284). On the other hand, in the case where the authentication section 145 fails in authentication (Step S283: N, Step S285: Y), the content utilization process is terminated.

In the content display process, the user is allowed to carry out either specification of utilization of content data that the user wants to utilize (Step S286) or specification of termination for utilization itself (Step S287). In the case of selecting specification of utilization for content data (Step S286: Y), the user carries out specification of content data for which the user has access authority and that the user can utilize and setting of its utilization conditions, by which these substances are transmitted to the user management database 107 (Step S288), Here, the utilization conditions are setup of beginning time for utilization of the content data and a period of time for utilization, but termination of the period of time for utilization is not necessarily specified, However, in the case where other person may also utilize content data, it is necessary that utilization of the content data by the user is to be terminated before that. Thus, in the case where the period of time for utilization is not set, the user carries out specification of termination at the time when the utilization is terminated (Step S287: Y), and termination for utilization of the content data is transmitted from the user terminal 101 to the user management database 107 (Step S289).

After the process at Step S288, the user terminal 101 becomes a state to wait for reception of the specified content data from the content delivery server 102 (Step S290). Then, in the case where the content data are received (Y), they are stored in the user content storage section 125 (Step S291), and the user may utilize these content data. However, in the case where the user sets up time of termination for utilization as a utilization condition of the content data at Step S288 and the content data are transmitted to the user management database 107, data indicating the time of termination for utilization are incorporated into the transmitted content data. Therefore, the user cannot utilize the corresponding content data at the time when this time of termination arrives.

In the case where the time of termination for utilization is not set, the user can utilize the content data without limitation of a period of time. However, in the case where the content data are lent to other person or the content subject is assigned thereto, the other person cannot utilize the content data in the situation that authority of utilization exists at the user side as it is. In such a case, as explained above, the user carries out specification of termination for utilization explained at Step S287 to transmit termination for utilization of the content data to the user management database 107 (Step S289). In this regard, without carrying out control of the time of termination for utilization of the content data at the user terminal 101 side, a procedure for termination of authority of utilization may be requested to the user by monitoring when the time of termination arrives by means of the user management database 107 to notify the user terminal 101 of it, for example, via the authentication server 103.

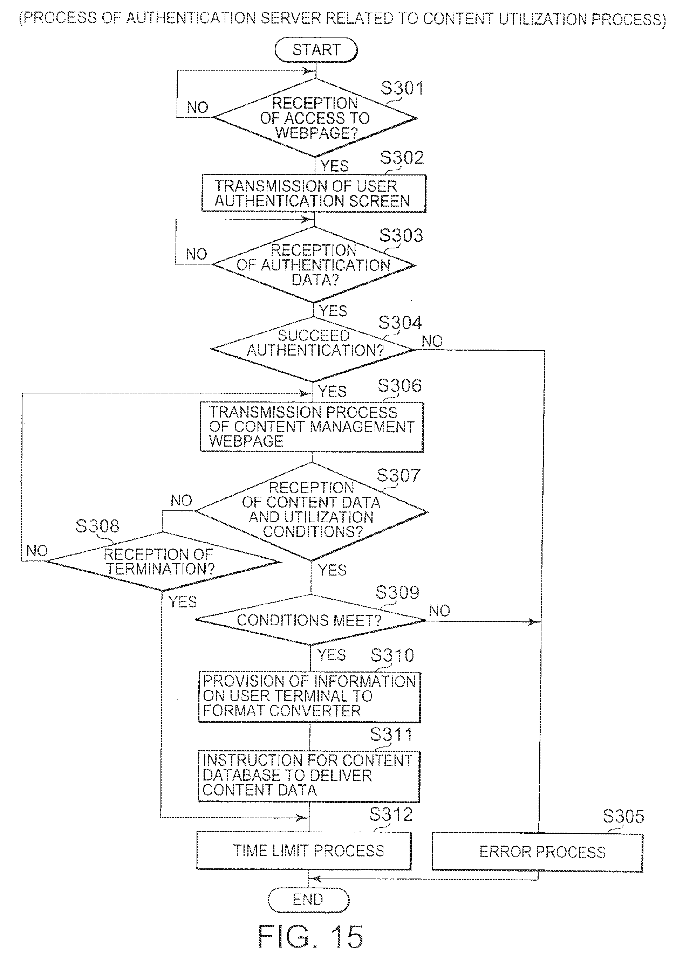

Fig. 15 is a flowchart showing a state of a process of the authentication server when the user terminal carries out the content utilization process. It will be described together with Figs. 1, 4 and 7.

hen the user terminal 101 accesses the webpage at Step S281 in Fig. 14, the authentication server 103 receives this (Step S301: Y). The authentication server 103 then transmits data related to a user authentication screen for carrying out user authentication to the user terminal 101 (Step S302). Then, when authentication data composed of a password and an ID are transmitted from the user terminal 101 on the basis of this (Step S303: Y), the authentication section 145 compares these with the registered password and ID. As a result, in the case where the password and ID do not correspond with them and the authentication section 145 cannot succeed authentication (Step S304: N), a predetermined error process is carried out (Step S305), and a series of processes is terminated.

On the other hand, in the case where the authentication section 145 succeeds the authentication (Step S304: Y), the authentication server 103 transmits a page of the content management web screen shown in Figs. 12 and 13 to the user terminal 101 (Step S306), and causes the user to select content data to be utilized. It then becomes a state to wait for specification of content data utilized from the user terminal 101 and reception of its utilization conditions (Step S307), or reception of time of termination for utilization (Step S308).

In the case where the specification of the content data utilized from the user terminal 101 and its utilization conditions are received (Step S307: Y), the authentication server 103 refers to the user information database storage section 176 of the user management database 107 to check whether or not the content data meet the utilization conditions and can be utilized (Step S309). As a result, for example, in the case where the content data do not meet the utilization conditions, for example, the period of time overlaps the period of time when the content data are being lent to other person (Step S309. N), the processing flow proceeds to Step S305 to carry out the error process, and a series of processes is terminated.

On the other hand, in the case where it is determined that the content data meet the utilization conditions and can be utilized (Step S309: Y), in order to finally deliver the content data to the user terminal 101, the format converter 105 is provided with information on a data format that the user terminal 101 can utilize (Step S31 0). Then, the authentication server 103 instructs the content database 108 to deliver the corresponding content data to the user terminal 101 (Step S311). After this, the user management database 107 is notified that the content data are utilized by the user terminal 101 for a predetermined period of time, a time limit process for preventing overlapping utilization of the content data is carried out (Step S312), and a series of processes is terminated.

On the other hand, in the case where the user terminal 101 is notified of the time of termination of the content data that are being utilized currently (Step S308: Y), the time limit process explained at Step S312 is carried out, and a series of processes is terminated.

In this regard, although the user terminal 101 has carried out the specification of the content data that the user terminal 101 wants to utilize against the user management database 107 via the authentication server 103 in the above explanation, the user terminal 101 may carry out specification of the content data against the user management database 107 directly. In this case, the user management database 107 carries out an instruction to deliver the content data requested from the user terminal 101 against the content database 108.

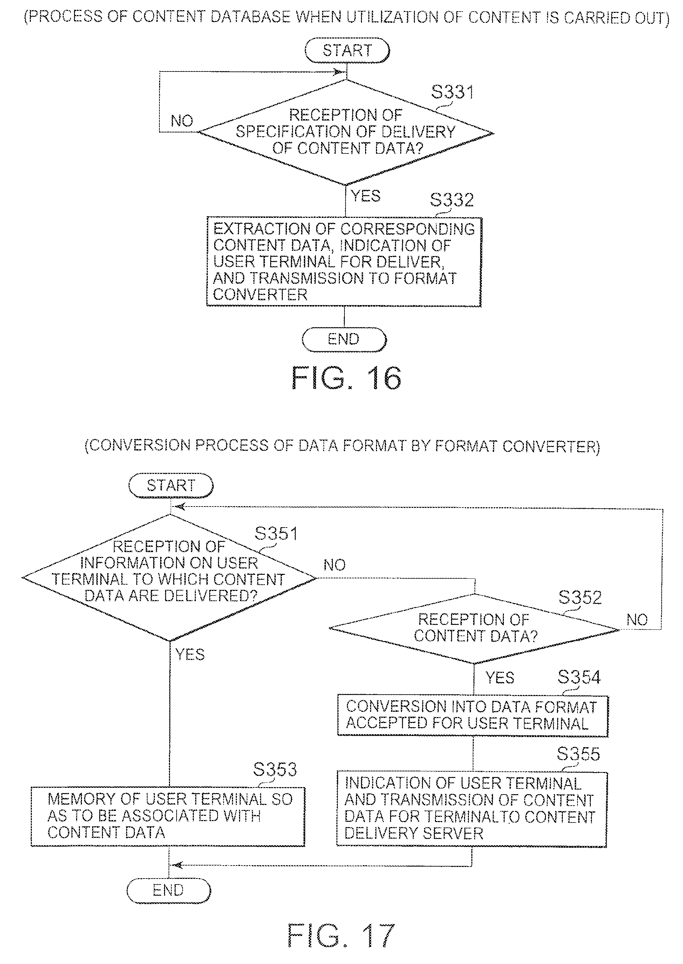

Fig. 16 is a flowchart showing a state of a process of the content database when utilization of content data is carried out. It will be described together with Figs. 1 and 6.

When specification of delivery of the content data is received (Step S331: Y), the content database 108 gets out (or extracts) the corresponding content data from the content data storage section 165, and the communication control section 164 indicates the user terminal 101 for deliver to transmit them to the format converter 105 (Step S332).

Fig. 17 is a flowchart showing a state of a conversion process of the data format by the format converter. It will be described together with Figs. 1 and 5.

The format converter 105 waits for reception of information on the user terminal 101 to which the content data are delivered (Step S351) or reception of the content data (Step S352). In the case where the information on the user terminal 101 to which the content data are delivered at Step S310 in Fig. 15 (Step S351: Y), the user terminal 101 is memorized so as to be associated with the content data to be delivered (Step S353).

On the other hand, in the case where the content data are transmitted from the content database 108 (Step S352: Y), these are temporary stored in the converted content storage section 155, and the converter 156 converts the content data into a data format accepted for the user terminal 101 for delivery on the basis of the information memorized at Step S353 (Step S354). Then, the content data after conversion is transmitted to the content delivery server 102 together with the designation of the user terminal 101 for delivery (Step S355). In this way, each of the content data stored in the content database 108 is converted into a data format meeting the user terminal 101 for delivery and then transmitted to the corresponding user terminal 101, and therefore, the content database 108 does not need to store the same content data in a plurality of data formats.

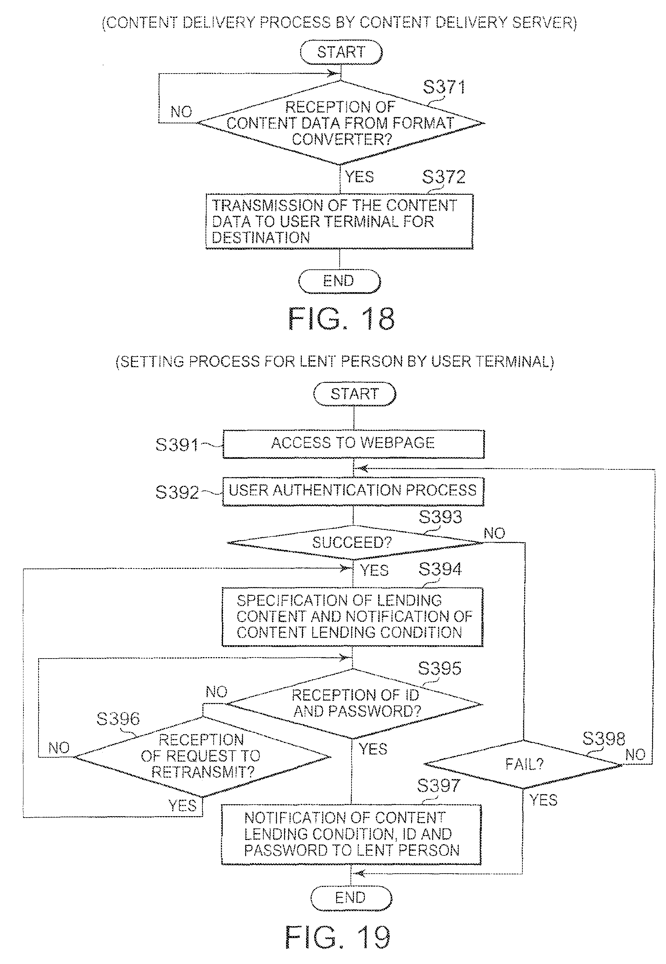

Fig. 18 is a flowchart showing a state of a content data delivery process by the content delivery server It will be described together with Figs. 1 and 3.

In the case where the content data are received from the format converter 105 (Step S371: Y), the content delivery server 102 temporary stores them in the delivered content storage section 135, and then transmits these to the user terminal 101 for destination (Step S372).

### <Content lending process to other person>

Fig. 19 is a flowchart showing a state of a setting process for a lent person carried out by the user terminal at the content lending process at Step S211 in Fig. 8. It will be described on the basis of Figs. 1, 2 and 4.

The user first accesses the authentication server 103 in which the webpage of the service provider is provided (Step S391) to carry out a user authentication process with the authentication section 145 (Step S392). As a result, in the case where the authentication section 145 succeeds authentication (Step S393: Y), specification of lending content to be lent and notification of a content lending condition thereof are carried out to the user management database 107 via the authentication server 103 (Step S394). Here, the content lending condition is mainly a period of time for carrying out lending, and this is required not to overlap a period of time for utilization of the user of the user terminal 101 with a period of time for lending of other person, which has already been set. After this notification, the user terminal 101 becomes a state to wait for the reception of an ID and a password for the lent person transmitted from the user management database 107 (Step S395), or the reception of a request to change the substance at Step S394 to be retransmitted because the lending condition is not met (Step S396).

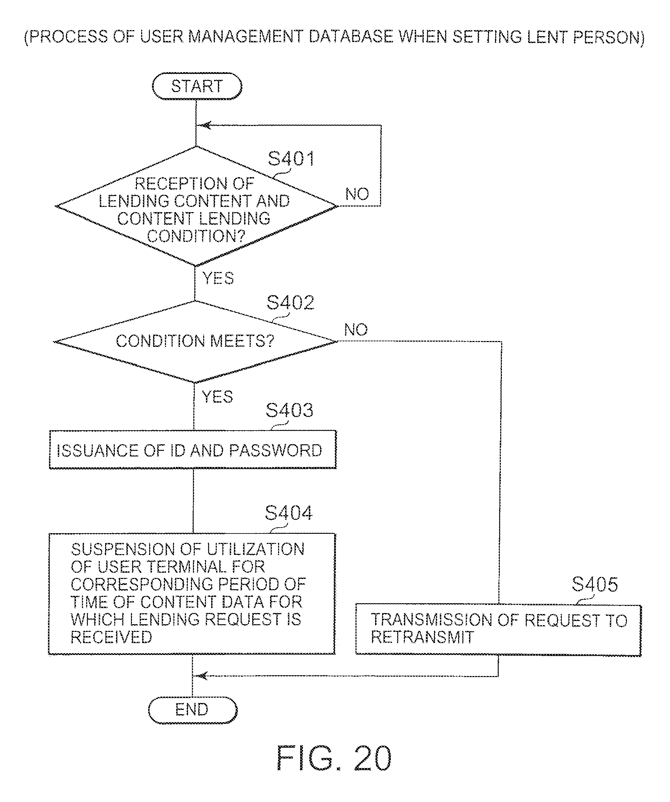

Fig. 20 is a flowchart showing a state of a process carried out by the user management database in this content lending process. It will be described on the basis of Figs. 1 and 7.

In the case where the specification of the lending content and the notification of the content lending condition at Step S394 in Fig. 19 are received from the user terminal 101 (Step S401: Y), the user management database 107 refers to the user information data base storage section 176 to check whether or not the corresponding content data meet the utilization condition and can be utilized (Step S402). As a result, in the case where the corresponding content data meet the utilization condition (Y), an ID and a password of time limit are issued for the lent person (Step S403). Then, utilization of the user terminal 101 for lending of the content data is suspended for the corresponding period of time so as not to overlap with utilization of the content data for which a lending request is received (Step S404).

On the other hand, in the case where it is determined that the corresponding content data do not meet the utilization condition at Step S402 (N), the user management database 107 requests the user terminal 101 to retransmit the content data and the revised utilization condition (Step S405).

Returning again to Fig. 19, the explanation will be continued. In the case where the ID and password of time limit for the lent person are transmitted from the user management database 107 (Step S395: Y), the user terminal 101 notifies the lent person of the content lending condition and these ID and password of time limit (Step S397), utilization of the content data for the lent person is accepted, and the process is terminated. Further, in the case where a request for retransmission corresponding to Step S405 is received (Step S396: Y), the processing flow returns to Step S394, specification of the lending content and notification of the content lending condition are again carried out by changing content data to be lent, or correcting an overlapping period of time. Further, in the case where the user terminal 101 fails to carry out the user authentication process (Step S393: N, Step S398: Y), the setting process for the lent person is terminated.

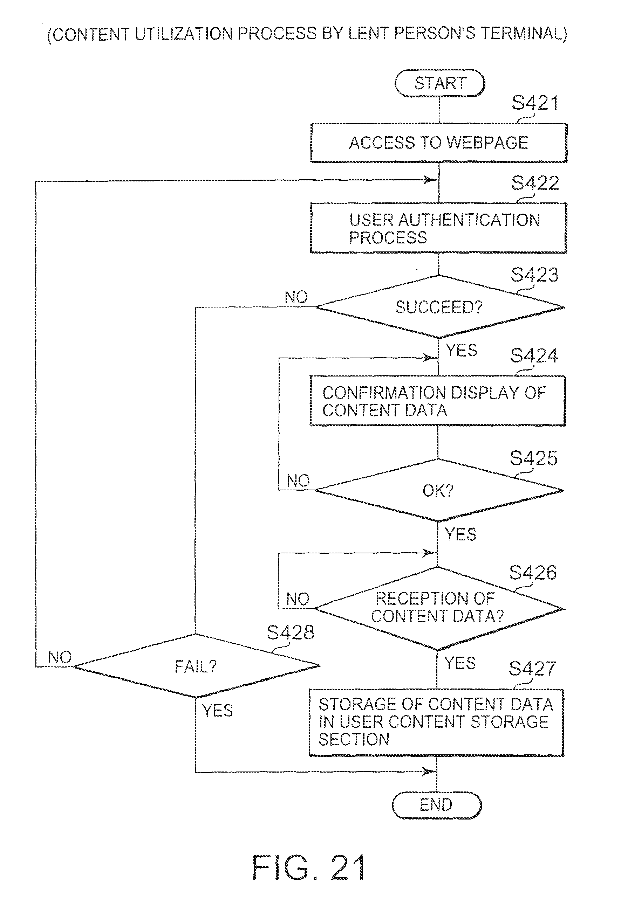

Fig. 21 is a flowchart showing a state of the content utilization process by the lent person's terminal. It will be described on the basis of Figs. 1, 2, 4 and 7 as a lent person's terminal is included in a part of the user terminal 101 in Fig. 1. Therefore, the lent person's terminal is also numbered "101" in the following description.

The user of a lent person's terminal 1 01 accesses the authentication server 103 in which a webpage of a service provider is provided (Step S421), and carries out a user authentication process with the authentication section 145 (Step S422). As a result, in the case where the authentication section 145 succeeds authentication (Step S423: Y), display for confirming the content data of a lending subject is carried out on the display section 126 (Step S424). On the other hand, in the case where the user of the lent person's terminal 101 carries out an indication of intention of OK (affirmative) from the operating section 217 (Step S425: Y), the lent person's terminal 101 becomes a state to wait for receiving the specified content data from the content delivery server 102 (Step S426). Then, in the case where the content data are received (Y), they are stored in the user content storage section 125 (Step S427), and the user of the lent person's terminal 101 utilizes this content. A utilizable period of time is set as a utilization condition.

In the case where the lent person's terminal 101 fails in authentication (Step S423: N, Step S428: Y), the process is terminated without lending the content.

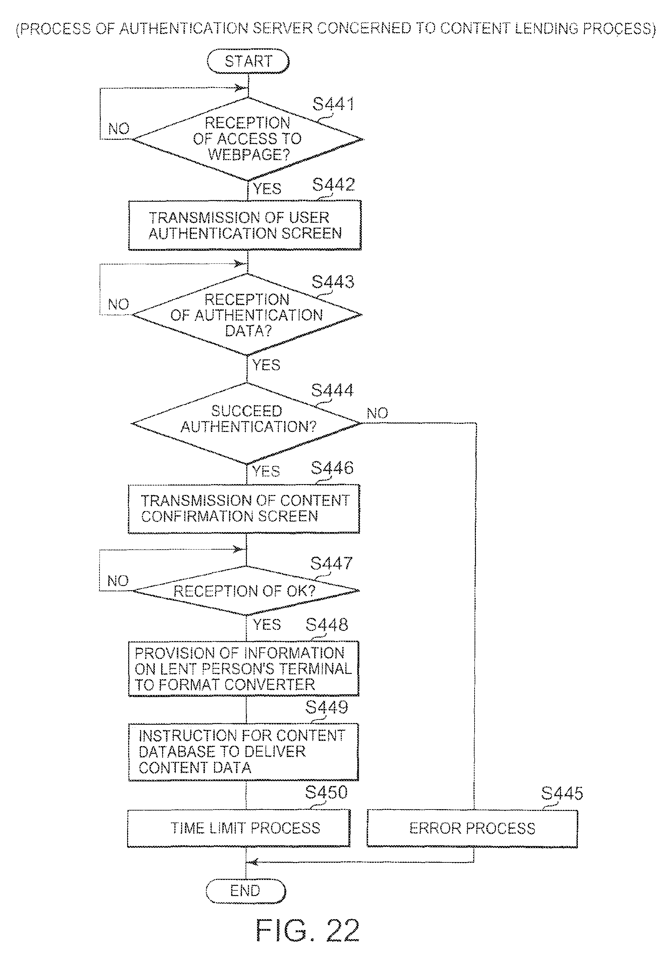

Fig. 22 is a flowchart showing a state of a process of the authentication server concerning the content lending process. It will be described together with Figs. 1, 4 and 7.

When the lent person's terminal 101 accesses the webpage at Step S421 in Fig. 21, the authentication server 103 receives this (Step S441: Y), and transmits data related to a user authentication screen for carrying out user authentication to the lent person's terminal 101 (Step S442). Then, when authentication data composed of a password and an ID are transmitted from the lent person's terminal 101 on the basis of this (Step S443: Y), the authentication section 145 compares these with the registered password and ID for the lent person's terminal 101. In the case where the password and ID do not correspond with them and the authentication section 145 cannot succeed authentication (Step S444: N), a predetermined error process is carried out (Step S445), and a series of processes is terminated.

On the other hand, in the case where the authentication section 145 succeeds the authentication (Step S444: Y), the authentication server 103 transmits a content confirmation screen for carrying out confirmation of content data for lending to the lent person's terminal 101 (Step S446). Then, in the case where indication of intention of OK (affirmative) is transmitted from the user of the lent person's terminal 101 (Step S447: Y), the authentication server 103 provides the format converter 105 with information on a data format that the lent person's terminal 101 can utilize in order to finally deliver the content data to the lent person's terminal 101 (Step S448). Then, the authentication server 103 instructs the content database 108 to deliver the corresponding content data to the lent person's terminal 101 (Step S449). After this, the user management database 107 is notified that the content data are utilized by the lent person's terminal 101 for a predetermined period of time, a time limit process for preventing overlapping utilization of the content data is carried out (Step S450), and a series of processes is terminated.

In this regard, although the lent person's terminal 101 has carried out the specification of the content data that the lent person's terminal 101 wants to utilize against the user management database 107 via the authentication server 103 in the above explanation, the lent person's terminal 101 may carry out specification of the content data against the user management database 107 directly. In this case, the user management database 107 carries out an instruction to deliver the content data requested from the lent person's terminal

Subsequent processes of the content database 108, the format converter 105 and the content delivery server 102 for the content data requested by this lent person's terminal 101 are basically the same as the processed in the case where the user terminal 101 utilizes content (Figs. 16 to 18). For this reason, the explanation for these is omitted.

In addition to the embodiment described above, some of services that the content asset management system 100 can adopt will be explained briefly.

### <Assignment service of content subject>

In the case where a user had not utilized the content subject, the user is allowed to assign the deposited content subject to another user. When the content subject is assigned, the user to carry out assignment may access the content management web screen shown in Figs. 12 and 13 using the user terminal 101 to specify the content, and assign this to other person, In this case, by carrying out consent of transfer of the content subject to a user as an assignee and being accepted, a property right of the content subject and access authority of content data thereof are transferred to the user. According to the assignment, the content (content data) is not displayed on the content management web screen of the original owner. Further, a new user ID and password are assigned to one who received the content subject from the user management database 107 in the same manner as explained in Fig. 9.

### <General succession and disposal service of content subject>

On the assumption that the user will die or continuation of the contract becomes impossible, the user is allowed to set a processing method for each of deposited content subjects. At this stage, the user accesses the content management web screen shown in Figs. 12 and 13, and is allowed to determine dealing of the content subjects with one's intention by selecting an item for dealing such as "general succession" and "disposal" (not shown in the drawings). Even though a substance of dealing is not particularly determined with respect to a single successor on general succession, the content is transferred to the successor as a property right. However, in the case where a right of utilization (access authority) of content data is to be succeeded to plural persons, it is necessary to carry out agreement so as not to overlap utilization, for example, so that a period of time for utilization for each of the plural persons is different from each other.

One that succeeds a property right of the content subject is allowed to set up continuation of a contract with a service provider, return of the content subject or abandonment of succession of the content subject on the content management web screen shown in Figs. 12 and 13. Further, it is possible to dispose of the content subject that has been succeeded once.

As described above, according to the present embodiments, the following effects can be obtained.

As a first effect, it is possible to collectively manage content subjects that a user himself or herself had created or justly acquired as property. Further, it is possible to make use of content concerned to copyright of other person without infringing the right. Further, in the case where a problem could occur with respect to copyright, it is possible to consult a service provider side.

Further, as a second effect, in the case where a content subject is a material object, the object storage warehouse 109 is caused to keep this. Therefore, it is possible to avoid a risk such as loss and disappearance due to physically keeping by an individual. Furthermore, it is possible to prevent alteration by other person and deterioration due to utilization. For example, a CD may become bruised on a surface thereof due to utilization, or a coating layer may be deteriorated or broken due to aging change. However, if these content subjects are not only kept in the object storage warehouse 109 but also are kept in the content database 108 as digital data of the content at the content asset management system 100 side, and management to backup periodically is carried out, it is possible to store the content well compared with the case of managing the content subject or the content data privately.

Moreover, as a third effect, it is possible to access the content data in an environment capable of connecting to a network such as the Internet at any time and from anywhere without carrying the content subject. In addition, even though a content utilization environment of the user of the content data is changed, it is possible to utilize the content data in a current utilization environment. For example, assume that there are some standards for reproduction like a DVD or a videotape, and that a user has the user terminal 101 and a memory medium for reproduction of a standard "A". Further assume that user changes and purchases an information processing apparatus corresponding to the standard B. In this environment, a trouble does not occur on utilization of the content data since a data format (or file format) is changed into a standard "B".

Further, as a fourth effect, it is possible to cause other person such as a friend, to whom it is difficult for the content subject to be delivered physically or timely, to lend content data of a content subject and utilize them. For example, in the case where other person who lives abroad hopes to utilize specific content data immediately, it is impossible to utilize mailing because it takes a number of days to do it. In the present embodiment, by utilizing a network such as the Internet, it is possible to deliver the content data immediately and the other person can utilize them. In addition, considering postage in express mailing, there is a strong possibility that an economic burden is reduced even in view of the case of paying a charge to the service provider side.

Moreover, as a fifth effect, it becomes possible to appropriately manage a content subject as a personal asset or property. At the service provider side, a list of deposited content subjects of respective individuals and utilization states are held in the user management database 107, and the content subjects are also stored physically in the object storage warehouse 109, Therefore, even when an owner of a content subject dies or forgets presence of the content subject itself, a relation of rights is stored apparently, and it is possible to surety carry out succession or collection of benefit by utilization of other person. Further, assignment or disposal of the content subject is possible in accordance with a desire of the owner.

Further, as a sixth effect, since the service provider carries out keeping of content subjects and delivery of content data in ones business, there is reliability for continuation of services unlike a free web service. Furthermore, there is also an effect that dubbing according to an apparatus utilized for view or listening and work of format conversion are not required for the content subject that has been purchased once.

Although management about personal content has been explained in the embodiment described above, it is also possible to manage content shared by plural persons or content possessed by a corporation or an entity such as cities, towns and villages in the same manner.

Further, although the case where overlapping utilization for content data related to a purchased content subject such as an album of a singer, for example, is not allowed has been described in the embodiment, the present invention is not limited to such a situation. For example, in the case where there is a content subject as original works that are allowed to make a limited number of copies, this is held in the object storage warehouse 109, and digital data of the limited number of copies can be caused to make available in the content database 108 timely parallel to them.

Moreover, although the content delivery server 102, the authentication server 103, the format converter 105, the user management database 107 and the content database 108 have appeared as apparatuses of the service provider side in the embodiment, these may be configured as an integrated apparatus arbitrarily, or a part of the apparatuses may be configured as further specialized apparatuses. In this regard, the format converter 105 has advantages for uniformity of a data format of content and conversion into a data format that the user terminal 101 can utilize, but it is not always required for the content asset management system 100. For example, it is the case where the content asset management system 100 is a limited system for managing content assets on the assumption that DVDs with a specific data format are utilized. In this case, since the data format has been unified from the beginning, no format converter 105 is required. Further, it is a matter of course that no format converter 105 is also required in the case where the content asset management system 100 is operated on the assumption that a service for conversion of a data format is not offered even in the content asset management system 100 in which various data formats are mixed.

Further, in the embodiment, if bibliographic information of a content subject corresponds with that of commercially available one at Step S262 in Fig. 11, the content subject is treated to have the same content data. However, there are some problems with respect to this. It is whether or not an identity check on this bibliographic information is carried out with respect to a difference of types of recording media or recording modes. For example, content of a cinema is commercially available for each of a videotape and a DVD as a recording medium. The DVD has a higher image quality and a higher sound quality, but it is more expensive. In such a case, in the case where only digital data of the cinema having an image quality of the DVD are stored in the content database 108 and a person who purchases a videotape can view the cinema with the DVD image quality on the user terminal 101, there is a lack of balance with a person who purchases a DVD. From this viewpoint, the number of content data based on recording systems or recording modes is required to be registered in the content database 108 even in a title of the same cinema.

On the other hand, in the case where a videotape is one recorded so as to become the highest image quality of technologies at that time, and it is more expensive than the DVD, it can be thought that there is no harm in a situation that the person who purchases the content of the videotape can utilize the content with the DVD image quality. In this case, one type of digital data may be stored for a title of the same cinema in the content database 108 regardless of the recording system or the recording mode. Further, even in the case of adopting a way of thinking of the former, there is also a way of thinking that one type of content with the highest image quality is stored in the content database 108 and the format converter 105 delivers content data to each of user terminal 101 by deteriorating a quality of them in accordance with the actual condition of each of the user terminals 101. These may be defined on the basis of how a service provider or an owner of copyright thinks a system.

An embodiment of the present invention may be summarized as follows.

A content asset management system, a method and a control program capable of managing a content asset of each person while protecting benefit as property of these content assets are provided. Each person deposits a content subject that he or she owns in an object storage warehouse 109 of a service provider side. Content data indicating the content subject are stored in a content database on the basis of this, a relation of rights such as a list of content of the person is recorded in a user management database 107. A user who utilizes the content data, including the owner of the content subject, accesses the service side with a user terminal 101 to carry out authentication, causes a format converter 105 to convert the content data into a data format suitable for the person, and receives delivery from a content delivery server 102 to utilize them.

## Claims

1. A content asset management system, comprising:
content media keeping means for keeping content media which hold content and is deposited by at least one of a plurality of right users;
content data storage means for storing the content held by the content media in the form of digital data;
determining means for determining, in response to a delivery request of content from a demander via a network, whether the delivery request is one from an eligible person or not, the eligible person being an owner of the content media or a person who has a predetermined relationship to the owner; and
content data delivery means for reading out content data of the content of the delivery request from the content data storage means and delivering the content data to a user terminal of the demander via the network in the case where the determining means determines that the demander is the eligible person.

2. The content asset management system as claimed in claim 1, wherein the content data storage means determines whether or not there is a difference between content data related to a content medium and any of the content data related to content media kept by the content media keeping means, and the content data storage means does not store the same content data more than once in the case where they are the same content data.

3. The content asset management system as claimed in claim 1 or 2, further comprising:
data format conversion means for converting the content data read out from the content data storage means into digital data that the user terminal to be delivered can reproduce.

4. The content asset management system as earned in one of claims 1 to 3, wherein the determining means is adapted to authenticate that the demander is the same as the owner of the content.

5. The content asset management system as claimed in one of claims 1 to 4, wherein the determining means is adapted to authenticate that the demander is the eligible person on the basis of a relation to specific content data specified by the owner of the content.

6. The content asset management system as claimed in one of claims 1 to 5, further comprising:
right relation registering means for registering a relation of rights of each of the content data of the owner.

7. The content asset management system as claimed in one of claims 1 to 6, wherein delivery of the content data is permitted in the case where utilization of the delivered content data is terminated in response to another delivery request for the same content.

8. The content asset management system as claimed in one of claims 1 to 7, wherein delivery of the content data is permitted without exceeding the number of content media kept by the content media keeping means in response to another delivery request for the delivery request of the same content.

9. A method of managing a content asset, the method comprising:
keeping content media which hold content and are deposited by at least one of a plurality of right users;
storing the content held by the content media in the form of digital data;
determining, in response to a delivery request of content data from a demander via a network, whether the delivery request is one from an eligible person or not, the eligible person being an owner of the content media or a person who has a predetermined relationship to the owner; and
reading out the content data of the content of the delivery request and delivering the content data to a user terminal of the demander via the network in the case where it is determined that the demander is the eligible person.

10. A computer readable recording media for storing a program for a content asset management system capable of keeping content media which hold content deposited by right users, and providing utilization of the content, the program causing a computer to execute:
storing the content held by the content media in the form of digital data;
determining, in response to a delivery request of content from a demander via a network, whether the delivery request is one from an eligible person or not, the eligible person being an owner of the content media or a person who has a predetermined relationship to the owner; and
reading out content data of the content of the delivery request and delivering the content data to a user terminal of the demander via the network in the case where it is determined that the demander is the eligible person.

11. A user terminal connected via a network to a content asset management system keeping content media which hold content and providing utilization of the content, the user terminal comprising:
means for carrying out a registration procedure process of the user terminal by accessing the content asset management system;
means for specifying content to be utilized and a utilization condition thereof to receive content data from the content asset management system;
means for specifying a lendable content and a lending condition thereof, the lendable content being among content data related to content media deposited by a user; and
means for notifying a lent person specified by the content asset management system that the content media is lendable.
